# EUROPÄISCHE PATENTSCHRIFT

(11) **EP 3 218 595 B1**
(45) Veröffentlichungstag und Bekanntmachung des Hinweises auf die Patenterteilung: **11.11.2020**
(21) Anmeldenummer: 15760475.2
(22) Anmeldetag: 10.09.2015
(51) Int. Cl.: F02M 63/00, F02M 59/46, F02M 63/02, F16K 17/04

(54) **KRAFTSTOFF-HOCHDRUCKPUMPE FÜR EIN KRAFTSTOFFSYSTEM FÜR EINE BRENNKRAFTMASCHINE**
HIGH-PRESSURE FUEL PUMP FOR A FUEL SYSTEM FOR AN INTERNAL COMBUSTION ENGINE
POMPE À CARBURANT HAUTE PRESSION POUR CIRCUIT DE CARBURANT DESTINÉ À UN MOTEUR À COMBUSTION INTERNE

(30) Priorität: 10.11.2014 DE 102014222873
(43) Veröffentlichungstag der Anmeldung: 20.09.2017
(73) Patentinhaber: Robert Bosch GmbH, 70442 Stuttgart (DE)
(72) Erfinder: TEIKE, Gerd, 71254 Ditzingen (DE); KLEINDL, Michael, 71701 Schwieberdingen (DE)
(86) Internationale Anmeldenummer: PCT/EP2015/070761
(87) Internationale Veröffentlichungsnummer: WO 2016/074826

(56) Entgegenhaltungen:
- EP-A1- 1 411 238
- DE-U1- 29 713 295
- GB-A- 176 037
- JP-A- 2002 276 492
- JP-A- 2003 185 041
- US-A1- 2011 284 092
- US-A1- 2011 315 005

## Beschreibung

### Stand der Technik

Die Erfindung betrifft eine Kraftstoff-Hochdruckpumpe nach dem Oberbegriff des Anspruchs 1, sowie ein Druckbegrenzungsventil nach dem nebengeordneten Patentanspruch.

Vom Markt her bekannt sind Kraftstoff-Hochdruckpumpen für Kraftstoffsysteme von Brennkraftmaschinen, beispielsweise für eine Benzindirekteinspritzung. Eine Kraftstoff-Hochdruckpumpe kann Kraftstoff aus einem Niederdruckbereich, beispielsweise stromabwärts von einer Vorförderpumpe, in einen Hochdruckbereich, insbesondere in einen Hochdruckspeicher (Rail) fördern. Dazu weisen Kraftstoff-Hochdruckpumpen häufig ein Druckbegrenzungsventil auf, welches einen Kraftstoffdruck in dem Hochdruckbereich auf einen vorgebbaren Maximalwert begrenzen kann. Somit kann ein Betrieb der Kraftstoff-Hochdruckpumpe verbessert und mögliche Beschädigungen des Kraftstoffsystems verhindert werden.

JP 2003 185041 A offenbart eine Kraftstoff-Hochdruckpumpe.

### Offenbarung der Erfindung

Das der Erfindung zugrunde liegende Problem wird durch eine Kraftstoff-Hochdruckpumpe nach Anspruch 1, sowie durch ein Druckbegrenzungsventil nach dem nebengeordneten Anspruch gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung betrifft eine Kraftstoff-Hochdruckpumpe für ein Kraftstoffsystem für eine Brennkraftmaschine gemäß Anspruch 1.

Durch die erfindungsgemäße Ausgestaltung des Aufnahmeabschnitts unter Verwendung von mehreren verschieden ausgeführten radialen Bereichen wird an dem Schließelement und/oder an dem Schließkörper eine Krafterhöhung mittels einer Umlenkung einer Kraftstoffströmung ermöglicht. Eine Berechnung der auf die beschriebenen Elemente einwirkenden Kräfte ist beispielsweise mittels einer entsprechenden Impulsgleichung möglich. Die Erfindung ermöglicht eine verbesserte Anströmung des Schließkörpers ("Federaufnahme"), wodurch sich ein gleichmäßigeres Öffnen und eine geringere Belastung einer den Schließkörper in Schließrichtung beaufschlagenden Ventilfeder ergeben kann. Weiterhin kann ein schädlicher Einfluss von Herstelltoleranzen insbesondere des Schließkörpers vermindert werden. Weiterhin können mögliche axiale Schwingungen des Schließelements bei einem Öffnungsvorgang bzw. einem Schließvorgang des Druckbegrenzungsventils vermindert werden.

Dabei kann eine Anzahl von Stößen zwischen dem Schließelement einerseits und einem Ventilsitz des Druckbegrenzungsventils andererseits vermindert werden. Dadurch können eine Belastung der Ventilfeder sowie eine Beanspruchung des Schließelements und des Ventilsitzes vermindert werden. Außerdem wird ein vergleichsweise hoher durch das geöffnete Druckbegrenzungsventil fließender Massenstrom und damit ein vergleichsweise schneller Abbau eines Überdrucks an dem Auslass der Kraftstoff-Hochdruckpumpe ermöglicht. Damit kann auch die Funktion der Kraftstoff-Hochdruckpumpe insgesamt verbessert werden.

Erfindungsgemäß umfassen beide Bereiche eine ebene Ringfläche. Dadurch können die hydraulischen Eigenschaften des Schließkörpers verbessert und seine Herstellung vereinfacht werden, wodurch Kosten gesenkt werden können.

Weiterhin ist vorgesehen, dass beide Bereiche eine ebene Ringfläche umfassen, wobei der Öffnungswinkel der Ringfläche des radial inneren zweiten Bereichs in etwa 100 Grad bis in etwa 150 Grad und der Öffnungswinkel der Ringfläche des radial äußeren ersten Bereichs in etwa 70 Grad bis in etwa 130 Grad beträgt. Dadurch wird eine besonders vorteilhafte Dimensionierung des Schließkörpers bzw. des Aufnahmeabschnitts beschrieben.

Weiterhin kann vorgesehen sein, dass der (insgesamt konkave) Aufnahmeabschnitt einen dritten Bereich aufweist, der radial einwärts vom radial inneren zweiten Bereich liegt, eine ebene Ringfläche umfasst oder als eine solche ausgebildet ist, einen Öffnungswinkel in etwa 70 Grad bis in etwa 110 Grad aufweist, bevorzugt etwa 90 Grad, und an dem das Schließelement anliegt.Somit umfasst der dritte Bereich den weiter oben beschriebenen Kontaktbereich oder ist sogar mit diesem identisch. Durch die erfindungsgemäße Bemessung des dritten Bereichs kann das Schließelement besonders gut geführt bzw. gehalten werden, wodurch die Funktion des Druckbegrenzungsventils verbessert wird.

Erfindungsgemäß ist das Schließelement als Kugel ausgeführt. Diese Geometrie des Schließelements ist besonders gut für ein Zusammenwirken mit dem erfindungsgemäß ausgeführten Schließkörper geeignet.

Weiterhin kann vorgesehen sein, dass eine axiale Erstreckung des radial äußeren ersten Bereichs in etwa 0,1 mm bis in etwa 0,4 mm beträgt. In einer bevorzugten Ausgestaltung ist dabei der radial äußere erste Bereich unmittelbar angrenzend zu einer dem Schließelement zugewandten ringförmigen Stirnfläche des Schließkörpers ausgeführt.

Nachfolgend werden beispielhafte Ausführungsformen der Erfindung unter Bezugnahme auf die Zeichnung erläutert. In der Zeichnung zeigen:
- Figur 1: eine schematische Darstellung eines Kraftstoffsystems für eine Brennkraftmaschine;
- Figur 2: einen Längsschnitt durch ein Druckbegrenzungsventil einer Kraftstoff-Hochdruckpumpe des Kraftstoffsystems von Figur 1; und
- Figur 3: eine vergrößerte Darstellung eines in etwa mittleren Abschnitts des Druckbegrenzungsventils von Figur 2 mit jeweiligen Endabschnitten eines Ventilkörpers und eines Schließkörpers sowie mit einem dazwischen angeordneten Schließelement;

Es werden für funktionsäquivalente Elemente und Größen in allen Figuren auch bei unterschiedlichen Ausführungsformen die gleichen Bezugszeichen verwendet.

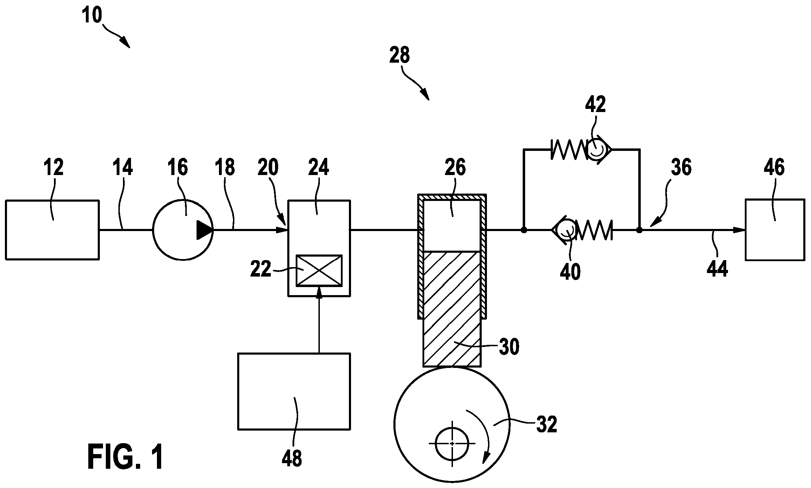

Figur 1 zeigt ein Kraftstoffsystem 10 für eine weiter nicht dargestellte Brennkraftmaschine in einer vereinfachten schematischen Darstellung. Aus einem Kraftstofftank 12 wird Kraftstoff über eine Saugleitung 14, mittels einer Vorförderpumpe 16, über eine Niederdruckleitung 18, über einen Einlass 20 eines von einer elektromagnetischen Betätigungseinrichtung 22 betätigbaren Mengensteuerventils 24 einem Förderraum 26 einer Kraftstoff-Hochdruckpumpe 28 zugeführt. Beispielsweise kann das Mengensteuerventil 24 ein zwangsweise öffenbares Einlassventil der Kraftstoff-Hochdruckpumpe 28 sein.

Vorliegend ist die Kraftstoff-Hochdruckpumpe 28 als Kolbenpumpe ausgeführt, wobei ein Kolben 30 mittels einer Nockenscheibe 32 in der Zeichnung vertikal bewegt werden kann. Hydraulisch zwischen dem Förderraum 26 und einem Auslass 36 der Kraftstoff-Hochdruckpumpe 28 ist ein in der Figur 1 als federbelastetes Rückschlagventil gezeichnetes Auslassventil 40 sowie ein ebenfalls als federbelastetes Rückschlagventil gezeichnetes Druckbegrenzungsventil 42 angeordnet. Der Auslass 36 ist an eine Hochdruckleitung 44 und über diese an einen Hochdruckspeicher 46 ("Common Rail") angeschlossen.

Das Auslassventil 40 kann zum Auslass 36 und das Druckbegrenzungsventil 42 zu dem Förderraum 26 hin öffnen. Die elektromagnetische Betätigungseinrichtung 22 wird durch eine Steuer- und/oder Regeleinrichtung 48 angesteuert. Abweichend von der Darstellung der Figur 1 kann ein in der Figur 1 linker Anschluss des Druckbegrenzungsventils 42 alternativ statt mit dem Auslass (ohne Bezugszeichen) der Kraftstoff-Hochdruckpumpe 28 auch mit dem Förderraum 26 oder einem beliebigen sonstigen Element stromaufwärts der Kraftstoff-Hochdruckpumpe 28 verbunden sein.

Im Betrieb des Kraftstoffsystems 10 fördert die Vorförderpumpe 16 Kraftstoff vom Kraftstofftank 12 in die Niederdruckleitung 18. Das Mengensteuerventil 24 kann in Abhängigkeit von einem jeweiligen Bedarf an Kraftstoff geschlossen und geöffnet werden. Hierdurch wird die zu dem Hochdruckspeicher 46 geförderte Kraftstoffmenge beeinflusst. Im Normalfall ist das Druckbegrenzungsventil 42 geschlossen.

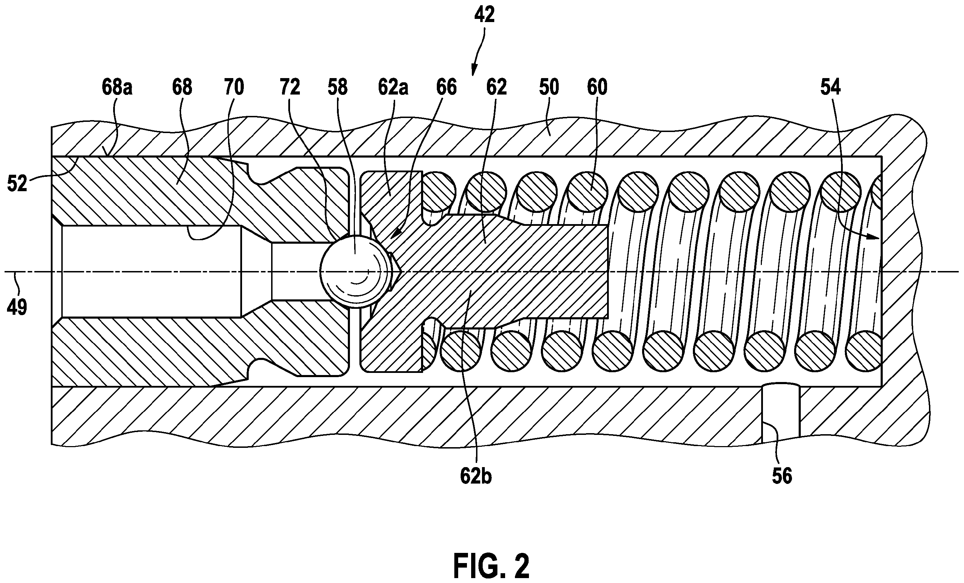

Wenn in einem vom Normalfall abweichenden Betriebsfall ein Kraftstoffdruck in der Hochdruckleitung 44 höher ist als ein Kraftstoffdruck in einem Bereich des Förderraums 26 (zuzüglich einer Federkraft einer Ventilfeder 60 des Druckbegrenzungsventils 42, siehe auch die Figur 2), so kann das Druckbegrenzungsventil 42 öffnen und somit kann Kraftstoff aus der Hochdruckleitung 44 zurück in den Förderraum 26 und von dort gegebenenfalls zurück in die Niederdruckleitung 18 strömen. Durch die Expansion kann der Kraftstoffdruck in der Hochdruckleitung 44 auf einen zulässigen Wert sinken und das Druckbegrenzungsventil 42 wieder schließen.

Figur 2 zeigt einen Längsschnitt durch das Druckbegrenzungsventil 42 der Kraftstoff-Hochdruckpumpe 28 von Figur 1. Das Druckbegrenzungsventil 42 ist hydraulisch zwischen dem Auslass 36 und einem vom Auslass 36 stromaufwärtigen Bereich der Kraftstoff-Hochdruckpumpe 28 angeordnet und kann zu dem stromaufwärtigen Bereich hin öffnen. Das Druckbegrenzungsventil 42 bzw. dessen nachfolgend näher beschriebenen Elemente sind im Wesentlichen rotationssymmetrisch um eine Längsachse 49 ausgeführt.

Das Druckbegrenzungsventil 42 umfasst ein im Wesentlichen als zylindrische Hülse ausgeführtes Gehäuse 50. An einer in der Figur 2 linken Stirnseite weist das Gehäuse 50 eine axiale erste Öffnung 52 auf, wobei ein Radius der Öffnung 52 einem Innenradius der zylindrischen Hülse entspricht. Die erste Öffnung 52 ist hydraulisch dem Auslass 36 bzw. dem zu diesem stromabwärtigen Hochdruckbereich zugeordnet. An einer in der Figur 2 rechten Stirnwand 54 ist das Gehäuse 50 geschlossen ausgeführt. In einem rechten unteren Abschnitt weist das Gehäuse 50 eine radiale zweite Öffnung 56 auf. Die zweite Öffnung 56 ist hydraulisch dem besagten bezüglich dem Auslassventil 40 stromaufwärtigen Bereich der Kraftstoff-Hochdruckpumpe 28 zugeordnet und beispielsweise mit dem Förderraum 26 verbunden. Vorliegend ist das Gehäuse 50 einstückig ausgeführt.

In einem in der Figur 2 horizontal mittleren Abschnitt weist das Druckbegrenzungsventil 42 ein Schließelement 58 auf, welches von einer als Schraubenfeder ausgeführten Ventilfeder 60 mittels eines Schließkörpers 62 in Schließrichtung beaufschlagt wird, also in der Figur 2 nach links. Das Schließelement 58 wird von dem Schließkörper 62 radial gehaltert. Vorliegend ist das Schließelement 58 eine "frei fliegende" Ventilkugel. In einem in der Figur 2 rechten Abschnitt der Ventilfeder 60 stützt sich diese axial an der Stirnwand 54 des Gehäuses 50 ab. Die Ventilfeder 60 wird mittels des Gehäuses 50 sowie mittels des Schließkörpers 62 radial geführt. Ein in Figur 2 linker Endabschnitt 62a des Schließkörpers 62 ist in etwa tellerförmig ausgeführt, wobei ein Außendurchmesser des Endabschnitts 62a größer ist als ein Innendurchmesser der Ventilfeder 60.

Weiterhin umfasst der Schließkörper 62 einen in Figur 2 auf der rechten Seite angeordneten zapfenförmigen Führungsabschnitt 62b welcher radial innerhalb der Ventilfeder 60 angeordnet ist. Dabei weist der Führungsabschnitt 62b in einem in etwa mittleren axialen Abschnitt des Schließkörpers 62 einen ersten Durchmesser auf, und in einem in der Figur 2 rechten axialen Abschnitt einen zweiten Durchmesser auf, welcher kleiner ist als der erste Durchmesser. Beide Durchmesser sind jeweils kleiner als ein Innendurchmesser der Ventilfeder 60. Dadurch kann der Schließkörper 62 definiert in der Ventilfeder 60 axial und radial gehalten werden.

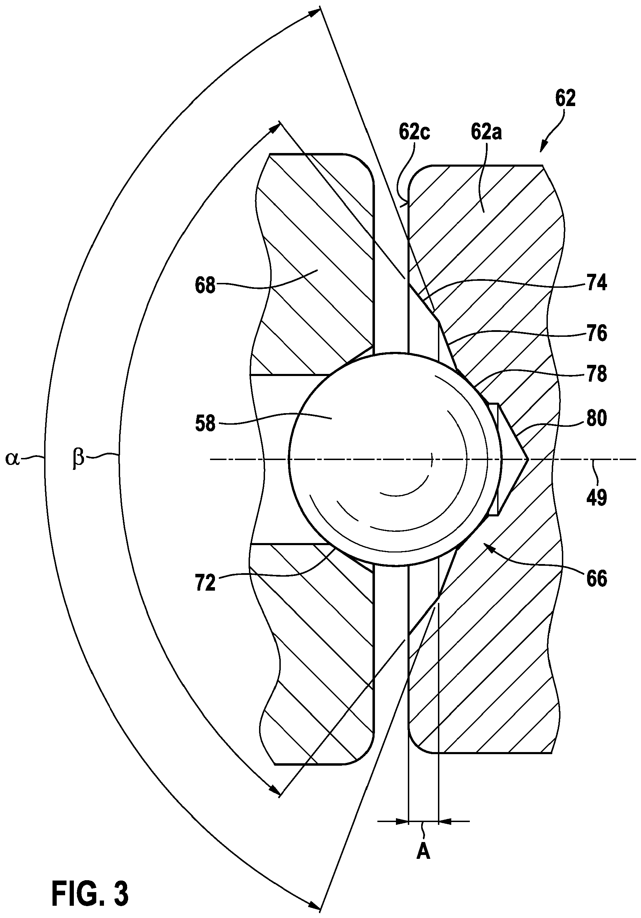

Vorliegend weist der Schließkörper 62 an dem tellerförmigen Endabschnitt 62a auf dessen in Figur 2 linker Stirnseite einen konkaven Aufnahmeabschnitt 66 auf, in dem das Schließelement 58 bereichsweise aufgenommen ist. Der Aufnahmeabschnitt 66 wird bei der nachfolgenden Figur 3 noch im Detail erläutert werden. Mittels des Schließkörpers 62 bzw. des konkaven Aufnahmeabschnitts 66 kann eine durch die Ventilfeder 60 erzeugte Druckkraft optimal auf das Schließelement 58 (Ventilkugel) übertragen werden.

Vorliegend ist der Schließkörper 62 massiv ausgeführt und beispielsweise aus einem Kunststoffmaterial hergestellt. In einer nicht gezeigten Ausführungsform des Druckbegrenzungsventils 42 weist der Schließkörper 62 zumindest abschnittsweise einen oder mehrere Hohlräume auf, wodurch Gewicht gespart werden kann.

In einem in der Figur 2 linken Abschnitt des Gehäuses 50 ist ein Ventilkörper 68 angeordnet, der an seiner radial äußeren Mantelfläche 68a in dem Gehäuse 50 reibschlüssig gehalten und vorzugsweise darin eingepresst ist. Der Ventilkörper 68 weist einen durchgehenden axialen zentrischen Längskanal 70 auf, welcher abschnittsweise einen konstanten Innendurchmesser aufweist. Der Längskanal 70 ist (in der Figur 2 links) mit dem Auslass 36 hydraulisch verbunden. An einem in der Figur 2 rechten Endabschnitt des Längskanals 70 ist an dem Ventilkörper 68 ein radial umlaufender Ventilsitz 72 ausgebildet, welcher bei geschlossenem Druckbegrenzungsventil 42 mit dem Schließelement 58 zusammenwirkt. Vorzugsweise sind die Geometrien des Ventilkörpers 68 und des Schließkörpers 62 derart bemessen, dass das Schließelement 58 (Ventilkugel) definiert gehalten bzw. definiert bewegt werden kann ("Flugweg").

In einer weiteren nicht dargestellten Ausführungsform der Kraftstoff-Hochdruckpumpe 28 ist das Gehäuse 50 des Druckbegrenzungsventils 42 ein integraler Bestandteil der Kraftstoff-Hochdruckpumpe 28 und somit kein eigenständiges Element. Dazu weist die Kraftstoff-Hochdruckpumpe 28 beispielsweise eine zylindrische Bohrung auf, in welcher die funktionalen Elemente des Druckbegrenzungsventils 42 aufgenommen sind.

Figur 3 zeigt einen axial in etwa mittleren Abschnitt des Druckbegrenzungsventils 42 von Figur 2. Dargestellt sind ein Endabschnitt des Ventilkörpers 68 zusammen mit dem Endabschnitt 62a des Schließkörpers 62 und dem axial zwischen dem Ventilkörper 68 und dem Schließkörper 62 angeordneten Schließelement 58.

Vorliegend weist der (insgesamt) konkave Aufnahmeabschnitt 66 des Schließkörpers 62 vier um die Längsachse 49 rotationssymmetrisch angeordnete Bereiche auf. Von radial auswärts nach radial einwärts sind an dem Aufnahmeabschnitt 66 vorhanden: Ein radial äußerer erster Bereich 74, ein radial innerer zweiter Bereich 76, ein Kontaktbereich 78 zwischen dem Schließelement 58 und dem Schließkörper 62, sowie eine in etwa kegelförmige zentrische Ausnehmung 80.

Vorliegend ist der radial äußere erste Bereich 74 unmittelbar angrenzend zu einer dem Schließelement 58 zugewandten ringförmigen Stirnfläche 62c des Schließkörpers 62 ausgeführt. Eine axiale Erstreckung A des radial äußeren ersten Bereichs 74 beträgt vorzugsweise in etwa 0,1 mm (Millimeter) bis in etwa 0,4 mm.

Insbesondere ist ein Öffnungswinkel β des radial äußeren ersten Bereichs 74 kleiner als ein Öffnungswinkel α des radial inneren zweiten Bereichs 76. Beide Bereiche 74 und 76 sind radial außerhalb von dem Kontaktbereich 78 angeordnet. Die kegelförmige zentrische Ausnehmung 80 ist derart ausgeführt, dass das Schließelement 58 nicht an einer umlaufenden Wandfläche (ohne Bezugszeichen) der zentrischen Ausnehmung 80 anliegen kann, sondern von dieser stets beabstandet ist.

Vorliegend umfassen der radial äußere erste Bereich 74 und der radial innere zweite Bereich 76 jeweils eine ebene konische Ringfläche bzw. sind durch eine ebene konische Ringfläche gebildet. Vorliegend beträgt der Öffnungswinkel α der Ringfläche des radial inneren zweiten Bereichs 76 in etwa 140 Grad und der Öffnungswinkel β der Ringfläche des radial äußeren ersten Bereichs 74 in etwa 95 Grad. In nicht dargestellten Ausführungsformen des Druckbegrenzungsventils 42 beträgt der Öffnungswinkel α der Ringfläche des radial inneren zweiten Bereichs 76 in etwa 100 Grad bis in etwa 150 Grad und der Öffnungswinkel β der Ringfläche des radial äußeren ersten Bereichs 74 in etwa 70 Grad bis in etwa 130 Grad, wobei der Öffnungswinkel β stets kleiner als der Öffnungswinkel α ist.

In einer weiteren nicht dargestellten Ausführungsform des Druckbegrenzungsventils 42 umfasst lediglich einer der beiden Bereiche 74 bzw. 76 eine ebene Ringfläche.

Der weiter oben beschriebene Kontaktbereich 78, an welchem das Schließelement 58 insbesondere bei geschlossenem Druckbegrenzungsventil 42 anliegt, entspricht einem dritten Bereich des Aufnahmeabschnitts 66. Dieser dritte Bereich liegt also radial einwärts von dem radial inneren zweiten Bereich 76. Der dritte Bereich umfasst vorliegend ebenfalls eine im Wesentlichen ebene Ringfläche oder ist als eine solche ausgebildet. Der dritte Bereich kann einen Öffnungswinkel (ohne Bezugszeichen) von in etwa 70 Grad bis in etwa 110 Grad aufweisen. In der Ausführungsform gemäß Figur 3 beträgt dieser Öffnungswinkel in etwa 90 Grad.

In der Ausführungsform des Druckbegrenzungsventils 42 gemäß den Figuren 2 und 3 ist das Schließelement 58 als Kugel ("Ventilkugel") ausgeführt. In einem nicht dargestellten Beispiel ist das Schließelement 58 zumindest abschnittsweise als Kegel ausgeführt.

## Patentansprüche

1. Kraftstoff-Hochdruckpumpe (28) für ein Kraftstoffsystem (10) für eine Brennkraftmaschine, mit einem hydraulisch zwischen einem Auslass (36) und einem vom Auslass (36) stromaufwärtigen Bereich angeordneten Druckbegrenzungsventil (42), welches ein federbeaufschlagtes Schließelement (58) aufweist, das von einem Schließkörper (62) radial gehaltert wird, wobei der Schließkörper (62) einen konkaven Aufnahmeabschnitt (66) aufweist, in dem das Schließelement (58) bereichsweise aufgenommen ist, wobei die Kraftstoff-Hochdruckpumpe (28) eine zylindrische Bohrung aufweist, in welcher die funktionalen Elemente des Druckbegrenzungsventils (42) aufgenommen sind und wobei das Schließelement (58) als Kugel ausgeführt ist, wobei ein Öffnungswinkel (β) eines radial äußeren ersten Bereichs (74) des Aufnahmeabschnitts (66) des Schließkörpers (62) kleiner ist als ein Öffnungswinkel (α) eines radial inneren zweiten Bereichs (76) des Aufnahmeabschnitts (66) des Schließkörpers (62), wobei beide Bereiche (74; 76) radial außerhalb von einem Kontaktbereich (78) zwischen Schließelement (58) und Schließkörper (62) angeordnet sind und dass der radial äußere erste Bereich (74) und der radial innere zweite Bereich (76) eine ebene Ringfläche umfassen, wobei der Öffnungswinkel der Ringfläche des radial inneren zweiten Bereichs (76) in etwa 100 Grad bis in etwa 150 Grad und der Öffnungswinkel der Ringfläche des radial äußeren ersten Bereichs (74) in etwa 70 Grad bis in etwa 130 Grad beträgt.

2. Kraftstoff-Hochdruckpumpe (28) nach Anspruch 1, **dadurch gekennzeichnet, dass** der Aufnahmeabschnitt (66) einen dritten Bereich (78) aufweist, der radial einwärts vom radial inneren zweiten Bereich (76) liegt, eine ebene Ringfläche umfasst oder als eine solche ausgebildet ist, einen Öffnungswinkel in etwa 70 Grad bis in etwa 110 Grad aufweist, bevorzugt etwa 90 Grad, und an dem das Schließelement (58) anliegt.

3. Kraftstoff-Hochdruckpumpe (28) nach wenigstens einem der vorhergehenden Ansprüche, **dadurch gekennzeichnet, dass** eine axiale Erstreckung des radial äußeren ersten Bereichs (74) in etwa 0,1 mm bis in etwa 0,4 mm beträgt.

4. Kraftstoff-Hochdruckpumpe (28) nach wenigstens einem der vorhergehenden Ansprüche, **dadurch gekennzeichnet, dass** der radial äußere erste Bereich (74) unmittelbar angrenzend zu einer dem Schließelement (58) zugewandten ringförmigen Stirnfläche des Schließkörpers (62) ausgeführt ist.

## Claims

1. High-pressure fuel pump (28) for a fuel system (10) for an internal combustion engine, with a hydraulic pressure limiting valve (42) which is arranged between an outlet (36) and a region which is upstream of the outlet (36), which pressure limiting valve (42) has a spring-loaded closing element (58) which is secured radially by a closing body (62), the closing body (62) having a concave receiving section (66), in which the closing element (58) is received in regions, the high-pressure fuel pump (28) having a cylindrical bore, in which the functional elements of the pressure limiting valve (42) are received, and the closing element (58) being configured as a ball, an opening angle (β) of a radially outer first region (74) of the receiving section (66) of the closing body (62) being smaller than an opening angle (α) of a radially inner second region (76) of the receiving section (66) of the closing body (62), the two regions (74; 76) being arranged radially outside a contact region (78) between the closing element (58) and the closing body (62), and the radially outer first region (74) and the radially inner second region (76) comprising a planar annular face, the opening angle of the annular face of the radially inner second region (76) being from approximately 100 degrees to approximately 150 degrees, and the opening angle of the annular face of the radially outer first region (74) being from approximately 70 degrees to approximately 130 degrees.

2. High-pressure fuel pump (28) according to Claim 1, **characterized in that** the receiving section (66) has a third region (78) which lies radially inwards from the radially inner second region (76), comprises a planar annular face or is configured as a planar annular face of this type, has an opening angle of from approximately 70 degrees to approximately 110 degrees, preferably approximately 90 degrees, and against which the closing element (58) bears.

3. High-pressure fuel pump (28) according to at least one of the preceding claims, **characterized in that** an axial extent of the radially outer first region (74) is from approximately 0.1 mm to approximately 0.4 mm.

4. High-pressure fuel pump (28) according to at least one of the preceding claims, **characterized in that** the radially outer first region (74) is configured so as to be directly adjacent with respect to an annular end face of the closing body (62), which annular end face faces the closing element (58).

## Revendications

1. Pompe à haute pression à carburant (28) pour un système de carburant (10) pour un moteur à combustion interne, comprenant une vanne de limitation de pression (42) disposée hydrauliquement entre une sortie (36) et une zone située en amont de la sortie (36), laquelle possède un élément de fermeture (58) chargé par ressort qui est maintenu dans le sens radial par un corps de fermeture (62), le corps de fermeture (62) possédant une portion d'accueil (66) concave dans laquelle l'élément de fermeture (58) est accueilli dans certaines zones, la pompe à haute pression à carburant (28) possédant un alésage cylindrique dans lequel sont accueillis les éléments fonctionnels de la vanne de limitation de pression (42) et l'élément de fermeture (58) étant réalisé sous la forme d'une bille, un angle d'ouverture (β) d'une première zone (74) extérieure dans le sens radial de la portion d'accueil (66) du corps de fermeture (62) étant inférieur à un angle d'ouverture (α) d'une deuxième zone (76) intérieure dans le sens radial de la portion d'accueil (66) du corps de fermeture (62), les deux zones (74 ; 76) étant disposées dans le sens radial en-dehors d'une zone de contact (78) entre l'élément de fermeture (58) et le corps de fermeture (62) et la première zone (74) extérieure dans le sens radial et la deuxième zone (76) intérieure dans le sens radial comportant une face annulaire plane, l'angle d'ouverture de la face annulaire de la deuxième zone (76) intérieure dans le sens radial étant d'environ 100 degrés à environ 150 degrés et l'angle d'ouverture de la face annulaire de la première zone (74) extérieure dans le sens radial étant d'environ 70 degrés à environ 130 degrés.

2. Pompe à haute pression à carburant (28) selon la revendication 1, **caractérisée en ce que** la portion d'accueil (66) possède une troisième zone (78) qui se trouve radialement vers l'intérieur par rapport à la deuxième zone (76) intérieure dans le sens radial, comporte une face annulaire plane ou est configurée en tant que telle, présente un angle d'ouverture d'environ 70 degrés à environ 110 degrés, de préférence d'environ 90 degrés, et contre laquelle repose l'élément de fermeture (58).

3. Pompe à haute pression à carburant (28) selon au moins l'une des revendications précédentes, **caractérisée en ce qu'**une extension axiale de la première zone (74) extérieure dans le sens radial est d'environ 0,1 mm à environ 0,4 mm.

4. Pompe à haute pression à carburant (28) selon au moins l'une des revendications précédentes, **caractérisée en ce que** la première zone (74) extérieure dans le sens radial est réalisée directement adjacente à une face frontale de forme annulaire du corps de fermeture (62) qui fait face à l'élément de fermeture (58).
